(19)

Europäisches
Patentamt
European
Patent Office
Office européen
des brevets

(11) **EP 1 953 540 B1**

(12) **EUROPEAN PATENT SPECIFICATION**

(45) Date of publication and mention
of the grant of the patent:
**11.01.2012 Bulletin 2012/02**

(51) Int Cl.:
*G01N 27/406* (2006.01)     *C04B 35/48* (2006.01)
*C04B 35/50* (2006.01)     *G01N 27/416* (2006.01)
*H01M 8/02* (2006.01)     *H01M 8/12* (2006.01)

(21) Application number: **06833002.6**

(22) Date of filing: **21.11.2006**

(86) International application number:
**PCT/JP2006/323152**

(87) International publication number:
**WO 2007/060925 (31.05.2007 Gazette 2007/22)**

(54) **ELECTROCHEMICAL CELL AND METHOD FOR PRODUCING ELECTROCHEMICAL CELL**

ELEKTROCHEMISCHE ZELLE UND VERFAHREN ZUR HERSTELLUNG DER
ELEKTROCHEMISCHEN ZELLE

PILE ÉLECTROCHIMIQUE ET PROCÉDÉ DE FABRICATION D UNE PILE ÉLECTROCHIMIQUE

(84) Designated Contracting States:
**DE**

(30) Priority: **24.11.2005 JP 2005339357**

(43) Date of publication of application:
**06.08.2008 Bulletin 2008/32**

(73) Proprietor: **Japan Science and Technology
Agency
Kawaguchi-shi,
Saitama 332-0012 (JP)**

(72) Inventors:
• **MATSUMOTO, Hiroshige
Fukuoka-shi, Fukuoka 8190395 (JP)**

• **TAKAMURA, Hitoshi
Sendai-shi, Miyagi 9808579 (JP)**
• **ISHIHARA, Tatsumi
Fukuoka-shi, Fukuoka 8190395 (JP)**

(74) Representative: **Bauch-Koepe, Katharina Anna
Koepe & Partner
Patentanwälte
Postfach 22 12 64
80502 München (DE)**

(56) References cited:
EP-A1- 1 598 892     EP-A2- 1 170 812
WO-A2-03/036746     JP-A- 2000 019 152
JP-A- 2002 083 611     US-A1- 2005 238 895

**Description**

Technical Field

The present invention relates to electrochemical cells including proton conductors as electrolytes, and particularly to an electrochemical cell with superior stability against gases containing carbon dioxide.

Background Art

Hydrogen is now under the spotlight as an energy source for fuel cells, for example, from the viewpoint of global environment conservation and energy saving. Accordingly, proton conductors have been widely studied as a useful electrochemical device for hydrogen separation, an essential technology for hydrogen production, and for fuel cells. Proton conductors, typically crystalline materials having a perovskite structure, are solid materials containing positive ions of hydrogen, namely, protons. Protons can travel through proton conductors relatively freely at rather high temperatures: a typical operating temperature range is about 600°C to 1,000°C.

A material in which only ions are allowed to flow selectively is called an electrolyte; a proton conductor is one type of solid electrolyte. A structure in which two electrodes are attached to an electrolyte as partitions forming two electrode chambers is called an electrochemical cell. An electrochemical cell can be constituted by attaching two electrodes to a proton conductor, having the above properties, used as an electrolyte.

An electrochemical cell including a proton conductor as an electrolyte has various functions. One of the functions is to transport hydrogen in the form of protons as the cell is supplied with current. This function of an electrochemical cell including a proton conductor is referred to as hydrogen pumping, and the electrochemical cell used for this function is referred to as a hydrogen pump. Specifically, at an anode (positive electrode), hydrogen is absorbed into the electrolyte through the following electrode reaction (1):

$$H_2 \rightarrow 2e^- + 2H^+ \qquad (1)$$

At a cathode (negative electrode), hydrogen is generated from protons through the following electrode reaction (2):

$$2e^- + 2H^+ \rightarrow H_2 \qquad (2)$$

The electrode reactions (1) and (2) above proceed simultaneously as the electrochemical cell is supplied with current, thus transporting hydrogen from the anode chamber to the cathode chamber.

An electrochemical cell including a proton conductor also functions as a fuel cell. Specifically, an electromotive force derived from the chemical energy of a fuel gas is produced between two electrodes by introducing the fuel gas into one electrode chamber and an oxidizing gas, typically air, into the other electrode chamber. This electromotive force can be output as power by connecting the two electrodes to an external load. If the fuel used is hydrogen, for example, the electrode reaction occurring at the anode is equal to the formula (1). At the cathode, protons react with oxygen to produce water through the following electrode reaction (3):

$$2e^- + 2H^+ + 1/2O_2 \rightarrow H_2O \qquad (3)$$

The reactions (1) and (3) above occur spontaneously when the electrochemical cell is connected to an external load, thus generating power.

An electrochemical cell including a proton conductor as an electrolyte also functions as a galvanic hydrogen sensor. Other functions of an electrochemical cell including a proton conductor as an electrolyte include a film reactor and a steam electrolyzer.

Proton conductors, typically oxides having a perovskite structure, as described above, are broadly divided into those containing zirconium as a constituent element and those containing no zirconium. Examples of cerate-based perovskite oxides containing no zirconium include $BaCe_{1-x}M_xO_{3-\delta}$ and $SrCe_{1-x}M_xO_{3-\delta}$ where M is a metal having a valence of +3 or less, such as yttrium or indium. Examples of perovskite oxides containing zirconium include $BaZr_{1-x}M_xO_{3-\delta}$ $SrZr_{1-x}M_xO_{3-\delta}$, $BaZr_{1-x-y}Ce_yM_xO_{3-\delta}$, and $SrZr_{1-x-y}Ce_yM_xO_{3-\delta}$.

It is desirable for an electrochemical cell including a proton conductor as an electrolyte that the electrode reactions represented by the formulae (1) and (2) or (3) proceed smoothly. From this viewpoint, cerate-based electrolytes are disadvantageous because they react readily with carbon dioxide in the surrounding atmosphere, although they have high conductivity. In contrast, zirconium serves to increase the chemical stability of the proton conductor, thus providing the effect of suppressing its reactivity with carbon dioxide. Research and development has so far been focused on the use of zirconium-containing electrolytes for applications, including fuel cells, where carbon dioxide is inevitably produced (for example, see Patent Document 1).

Adding zirconium, however, causes the problem of decreasing the activity of electrodes such as platinum electrodes. The inventors have also proposed techniques concerning palladium alloys and high-temperature proton-electron mixed conductors as electrodes effective for zirconium-containing electrolytes (for example, see Patent Document 2), although the use of such electrodes may be insufficient in some cases.

Also disclosed is a technique of introducing intermediate layers between a perovskite solid electrolyte and two electrodes (for example, see Patent Document 3). This technique, however, is aimed at preventing mixed conduction for a $LaGaO_3$-based electrolyte to increase the transport number of oxygen ions; this is not a technique designed for use with a zirconium-containing electrolyte to suppress the reactivity with a gas containing carbon dioxide.

Another known technique is to provide a first solid electrolyte with oxide ion conductivity at 800 °C of 0.015 S/cm or more and bending strength of 600 MPa or more, a fuel electrode comprised of a cermet of a catalyst and a second solid electrolyte with the conductivity of 0.08 S/cm or more, bonded to one side of the first electrolyte, and an air electrode comprised of a compound of first perovskite type oxide with a third solid electrolyte, bonded to the other side optionally via an intermediate layer comprised of a fourth solid electrolyte, wherein the electrodes are preferably coated with fuel and air electrode contact layers, respectively (Patent Document 4).

Patent Document 1: Japanese Unexamined Patent Application Publication No. 9-52764
Patent Document 2: PCT/JP2004/017100
Patent Document 3: Japanese Unexamined Patent Application Publication No. 2002-83611
Patent Document 4: European Patent Application EP 1 598 892 A1

Disclosure of Invention

Problems to be Solved by the Invention

To solve the above problems, the present invention provides an electrochemical cell applicable when a zirconium-based electrolyte has to be used because a gas containing carbon dioxide is introduced into an electrode chamber, and also provides a method for producing such an electrochemical cell.

Means for Solving the Problems

As a result of an intensive study, the inventors have found that an intermediate layer disposed between an electrode and an electrolyte to activate electrode reaction can decrease electrode overvoltage, an evaluation measure of electrode-reaction driving force, and increase current density. The inventors have demonstrated the findings by experimentation, thus realizing the following inventions.

An electrochemical cell according to the invention of Claim 1 includes an electrolyte formed of a proton conductor containing zirconium (Zr), and an intermediate layer containing a proton conductor containing no zirconium is disposed between at least one electrode side of the electrolyte and an electrode.

According to the invention of Claim 1, the proton conductor containing no zirconium is represented by the general formula $A_xCe_{1-y}M_yO_{3-\delta}$, wherein A is at least one of calcium (Ca), strontium (Sr), and barium (Ba); the range of x is $0.8 \leq x \leq 1.2$; the range of y is $0.01 \leq y \leq 0.4$; and M is at least one of aluminum (Al), scandium (Sc), gallium (Ga), yttrium (Y), indium (In), and rare-earth metals other than cerium which are the elements of atomic numbers 57 and 59 to 71.

A proton conductor is typically based on an oxide having the composition $ABO_3$ and, as described above, selecting cerium for B provides superior conductivity and compatibility with electrodes. In addition, partial substitution of M, which is trivalent, for B, which is tetravalent, is essential for realizing proton conductivity. A larger amount of M is preferred because the proton concentration increases with the amount of M substituted, although the range of the present invention is appropriate because an excessive amount of M is known to decrease the proton conductivity. Furthermore, the stoichiometric ratio of A to B, including cerium and M, does not have to be 1; the oxide functions as a proton conductor if A/B falls within the range of 0.8 to 1.2.

In the electrochemical cell according to Claim 1, according to the invention of Claim 2, the intermediate layer contains a mixed powder of the proton conductor containing no zirconium and an electrode material.

In general, an electrode reaction can occur at the interface between "the proton conductor and the electrode material". The use of the mixed powder for the intermediate layer increases the area of sites where the electrode reaction occurs. In addition, the mixed powder inhibits sintering of the electrode material, thus preventing a decrease in electrode activity due to sintering.

According to the invention of Claim 3, the proton conductor containing no zirconium is $SrCe_{0.95}Yb_{0.05}O_{3-\delta}$.

According to the invention of Claim 4, a gas containing no carbon dioxide ($CO_2$) is introduced to the electrode side on which the intermediate layer is disposed.

When an electrochemical cell including a proton conductor is used, carbon dioxide is often contained in either electrode chamber. This necessitates the use of an electrolyte containing zirconium. In this case, a palladium alloy or a high-temperature proton-electron mixed conductor can be used for electrodes; besides, a smooth electrode reaction can be achieved by inserting an electrolyte containing zirconium between an electrode corresponding to the electrode chamber containing no carbon dioxide and the electrolyte.

According to the invention of Claim 5, the intermediate layer of the above electrochemical cell has a thickness of 0.5 to 15 $\mu$m.

The thickness of the intermediate layer, which may be selected based on the thickness of the electrolyte, is preferably 0.5 $\mu$m or more because the thickness of the electrolyte can be about 1 $\mu$m. To suppress electrical resistance, the thickness is preferably about 15 $\mu$m or less.

A hydrogen-pumping apparatus according to the invention of Claim 6 includes the electrochemical cell according to the above inventions.

A fuel-cell apparatus according to the invention of Claim 7 includes the electrochemical cell according to the above inventions.

A method according to the invention of Claim 8 for producing the above electrochemical cell includes fixing the intermediate layer containing the proton conductor containing no zirconium on at least one electrode side of the electrolyte formed of the proton conductor containing zirconium and fixing the electrode on a surface of the intermediate layer.

The term "fixing" used in the present invention is a concept that encompasses forming the intermediate layer by applying and firing a paste prepared by kneading a powdered material containing the proton conductor containing no zirconium at room temperature or by vapor deposition at room temperature.

According to the invention of Claim 9, the step of fixing the intermediate layer includes a substep of firing the intermediate layer at a temperature of 1,450°C to 1,550°C.

Advantages

The above inventions can provide an electrochemical cell which has low electrode overvoltage, high current density, and high stability in terms of materials chemistry even if a reactant gas containing carbon dioxide is used. This electrochemical cell is applicable when a zirconium-based electrolyte has to be used because a reformed-gas reaction, for example, introduces a gas containing carbon dioxide into an electrode chamber.

The electrochemical cell according to the present invention can be used to provide a compact, high-performance fuel-cell apparatus and hydrogen-pumping apparatus. For the hydrogen-pumping apparatus, the present invention can reduce energy loss due to electrodes, thus enabling hydrogen pumping with reduced power. For the fuel-cell apparatus, the present invention can reduce energy loss due to electrodes similarly, thus enabling more efficient power generation.

Best Modes for Carrying Out the Invention

The results of evaluation of electrochemical cells according to the present invention for hydrogen separation performance and power generation characteristics as fuel cells will now be described. The evaluation was performed by comparing the hydrogen production rates and the overvoltage characteristics of electrochemical cells including intermediate layers according to the present invention with those of conventional electrochemical cells including no intermediate layers. The evaluation was based on the following principles.

(a) Hydrogen Production Rate

Under favorable hydrogen-pumping conditions, the following electrode reactions proceed:

$$\text{Anode: } H^2 \rightarrow 2H^+ + 2e^-$$

$$\text{Cathode: } 2H^+ + 2e^- \rightarrow H_2$$

If a current flows at a current density of J [mA/cm$^2$] per unit electrode area, the cathode is supplied with electrons at a rate of J x $10^{-3} \times 60$ [C/min-cm$^2$] because 1 A = 1 C/sec (coulomb per second). According to the above electrode reactions, two electrons are used to produce one hydrogen molecule, so that 2F [C/mol] of electrons are required to produce one mole of hydrogen, where F is the Faraday constant, namely, 96,485 C/mol. Hence, the theoretical rate at which hydrogen is produced when a current flows at a current density of J [mA/cm$^2$] is represented as follows:

$$(\text{Theoretical hydrogen production rate}) = (J \times 10^{-3} \times 60)/2F$$

$$[\text{mol/min} \cdot \text{cm}^2]$$

An agreement between a hydrogen production rate determined by experimentation and the theoretical hydrogen production rate means that all electricity supplied from a DC power supply has been used for hydrogen pumping, namely, a current efficiency of 1. The actual hydrogen production rate, however, falls below the theoretical value because of various factors when a predetermined amount of current or more flows. In such a state, normal hydrogen pumping is no longer permitted. Thus, how high the current density can be when a current is allowed to flow while maintaining a current efficiency of 1 is an important measure of performance, and the electrodes are one of the main factors for this. Hence, an electrode that allows more current to flow can be evaluated as a high-performance electrode.

(b) Overvoltage Characteristics

An electrochemical cell can be considered a device that facilitates conversion between electrical energy and another type of energy (for example, chemical energy). In hydrogen separation, for example, work is done by electrical energy in order to separate hydrogen. A fuel cell, on the other hand, converts the latent chemical energy of hydrogen into electrical energy. Such energy conversions are initiated when a current flows through the electrochemical cell. It is therefore necessary that the electrode reactions proceed in a certain direction and that an ionic current flow through the electrolyte. The electrodes and the electrolyte then require extra voltage, namely, overvoltage. The respective overvoltages are referred to as electrode overvoltage (anode overvoltage and cathode overvoltage) and electrolyte resistance overvoltage. The overvoltage consumes electrical energy, which then dissipates as heat, thus causing energy loss in the above energy conversions. Hence, minimizing the overvoltage due to the electrodes, namely, anode overvoltage and cathode overvoltage, contributes to increased energy efficiency.

The overvoltage can be measured by a current interruption method. The anode and cathode potentials measured with respect to that of a reference electrode become higher or lower during the passage of a certain current by the overvoltage than in an open-circuit state. When the current is interrupted, the potentials of the two electrodes tend to return to those in an open-circuit state; in other words, the overvoltage tends to return to zero. While the electrolyte resistance overvoltage decreases very quickly, the electrode overvoltage decreases relatively slowly. Based on this difference, a change in potential upon current interruption is measured as the electrolyte resistance overvoltage. Thus, the anode overvoltage and the cathode overvoltage can be determined by subtracting the electrolyte resistance overvoltage (ohmic loss), measured by the current interruption method, from the difference between the potentials of the two electrodes during the passage of current and those in an open-circuit state.

Example 1

In this example, proton-conductor cells were evaluated for hydrogen pumping by simulating hydrogen separation.

(Samples)

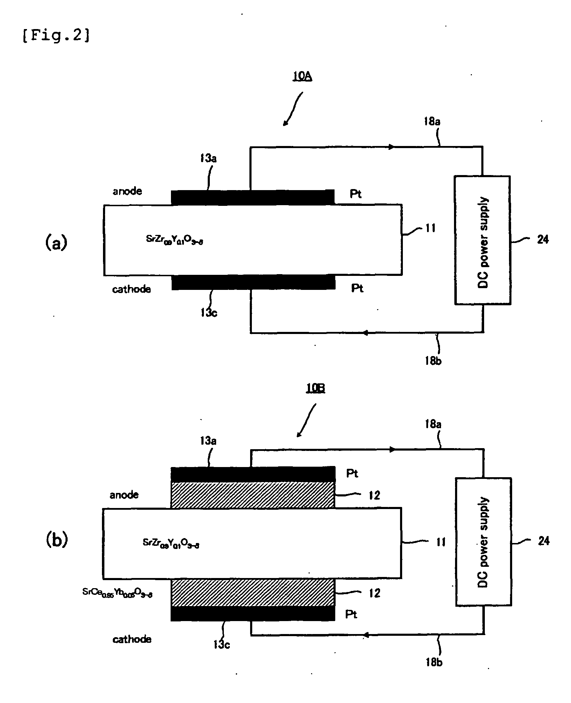

Figs. 2(a) and 2(b) are diagrams showing electrochemical cells 10A and 10B, respectively, used for evaluation. In these figures, the electrolyte 11 used was formed of $SrZr_{0.9}Y_{0.1}O_{3-\delta}$. In the electrochemical cell 10A, porous platinum electrodes were directly provided on the electrolyte 11 as an anode 13a and a cathode 13c. In the electrochemical cell 10B, thin films of a proton conductor having the composition $SrCe_{0.95}Yb_{0.05}O_{3-\delta}$ were provided on both surfaces of the electrolyte 11 as intermediate layers 12, and the porous platinum electrodes 13a and 13c were provided thereon, as in the electrochemical cell 10A. The electrolyte 11 was disk-shaped (circular), and it had a diameter of about 13.5 mm and a thickness of 0.5 mm. For the electrochemical cell 10A, platinum paste was applied to the center of each surface of the disk-shaped sample in a circle with a diameter of 8 mm and was fired at 950°C for 30 minutes. For the electrochemical cell 10B, a paste containing $SrCe_{0.95}Yb_{0.05}O_{3-\delta}$ powder was applied to the center of each surface of the disk-shaped electrolyte in a circle with a diameter of 8 mm and was fired at 1,500°C for five hours, and platinum paste was then applied in a circle with a diameter of 8 mm and was fired at 950°C for 30 minutes, as in the production of the electrochemical cell 10A. The porous platinum electrodes 13a and 13c had a thickness of about 5 μm (microns), and the intermediate layers 12, formed of $SrCe_{0.95}Yb_{0.05}C_{3-\delta}$, had a thickness of about 10 μm (microns).

(Evaluation Apparatus)

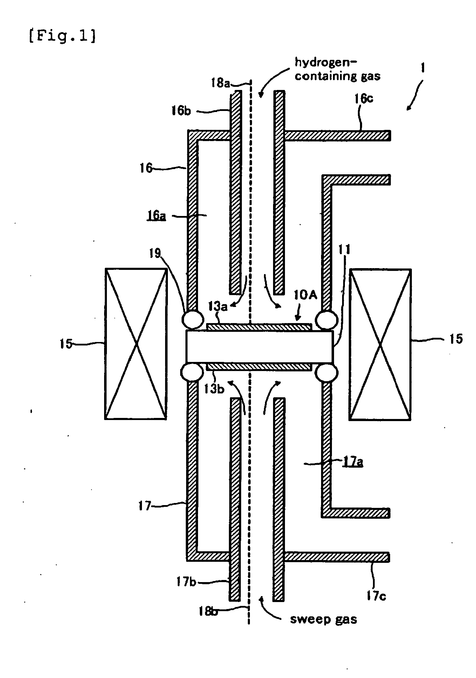

Fig. 1 shows the structure of a performance evaluation apparatus 1 for the electrochemical cell 10A. In this figure, the anode 13a and the cathode 13c were connected to leads 18a and 18b, respectively, through platinum nets and platinum paste (not shown) for current collection. A platinum electrode (not shown) was attached to the rim of the disk-shaped electrolyte 11 as a reference electrode. Thus, the electrolyte 11, the anode 13a, and the cathode 13c constituted the electrochemical cell 10A. The reference electrode, provided as a reference for measuring the anode and cathode potentials, had no direct effect on the electrochemical function of the cell. The top and bottom of the electrochemical cell 10A were held between ceramic tubes 16 and 17 with annular sealing members 19 disposed therebetween thus forming an anode chamber 16a and a cathode chamber 17a. The ceramic tube 16 included a gas-introducing tube 16b and a gas outlet 16c, and the ceramic tube 17 included a gas-introducing tube 17b and a gas outlet 17c. The evaluation apparatus used had the same structure for the electrochemical cells of the other examples, including the electrochemical cell 10B, to be described below.

The electrochemical cells thus configured were maintained at 800°C in an electric furnace and were subjected to the following hydrogen pumping test. Pure hydrogen and an argon gas containing 1% hydrogen were introduced into the anode chamber 16a and the cathode chamber 17a, respectively, at a gas flow rate of 30 mL/min. These gases were wetted with saturated steam at 17°C (the steam partial pressure was about 1,900 Pa) to prevent reduction of the electrolyte sample. The anode gas was introduced to supply hydrogen to be pumped to the electrochemical cells, and the cathode gas was introduced to sweep hydrogen produced in the cathode chamber as a result of hydrogen pumping. The cathode sweep gas was mixed with 1% hydrogen for convenience of potential measurement.

With the gases introduced, as described above, a DC power supply 24 was connected to the leads 18a and 18b, as shown in Figs. 2(a) and 2(b), so that a predetermined current was allowed to flow from the anode to the cathode (the arrows along the leads in the figures indicate an electron flow). The rate at which the current caused hydrogen to be pumped from the anode chamber to the cathode chamber, that is, the hydrogen production rate at the cathode, was determined by measuring the hydrogen concentration of a cathode-outlet gas by gas chromatography. The anode and cathode characteristics were measured by the current interruption method. The measurement procedure was as follows. The potentials of the anodes and the cathode with respect to that of the reference electrode were measured in an open-circuit state (the state where no current flowed) and in a state where the predetermined current flowed. The anode overvoltage and the cathode overvoltage were then evaluated by subtracting the electrolyte resistance overvoltage (ohmic loss), measured by the current interruption method, from the differences between the potentials of the individual electrodes during the passage of current and those in an open-circuit state.

(Evaluation Results)

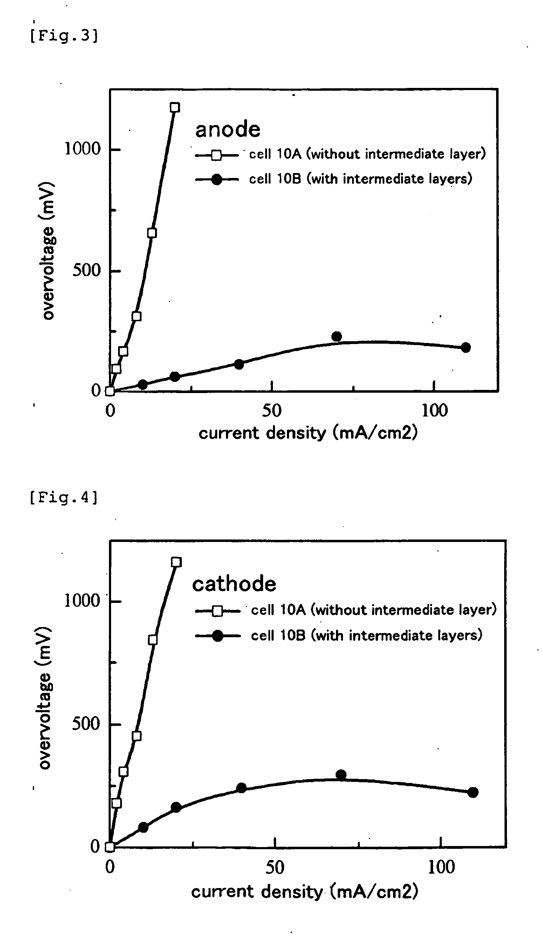

Figs. 3 and 4 show the anode overvoltage and the cathode overvoltage, respectively. The hydrogen production rate was always consistent with Faraday's law within the examined range (the current efficiency was 1). While the cell (10A) including no intermediate layers had high anode and cathode overvoltages exceeding 1 V at a low current density, namely, 20 mA/cm$^2$, the cell (10B) including the intermediate layers had significantly low anode and cathode overvoltages, namely, about 200 mV, at a current density of 110 mA/cm$^2$. These results demonstrated the effectiveness of the intermediate layers.

Example 2

In this example, as in Example 1, proton-conductor cells were evaluated for hydrogen pumping by simulating hydrogen separation.

(Samples)

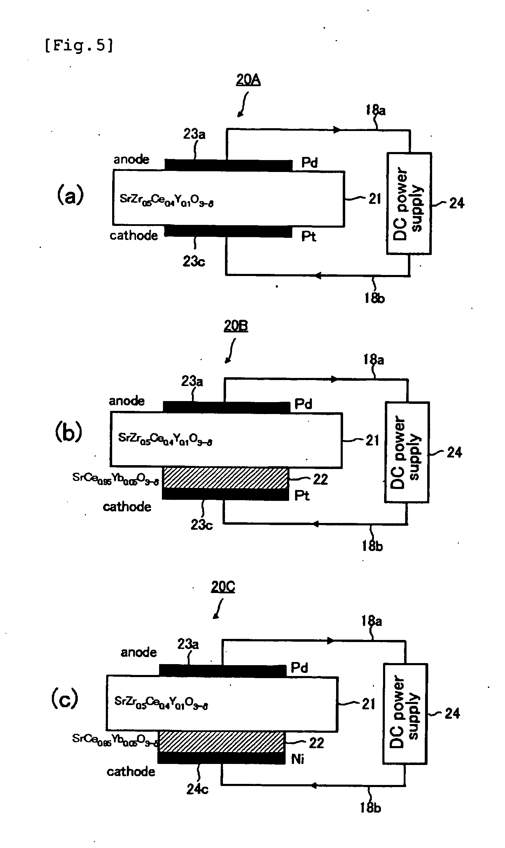

Figs. 5(a) to 5(c) show electrochemical cells 20A to 20C, respectively, used for evaluation. In these figures, the proton-conductive electrolyte 21 used for the electrochemical cell 20A was formed of a ceramic having the composition $SrZr_{0.5}Ce_{0.4}Y_{0.1}O_{3-\delta}$. The cathode used for the electrochemical cell 20A was a porous platinum electrode 23c directly provided on the electrolyte 21. In the electrochemical cell 20B, a thin film of a proton conductor having the composition $SrCe_{0.95}Yb_{0.05}SO_{3-\delta}$ was provided on the electrolyte 21 as an intermediate layer 22, and the porous platinum electrode 23c was provided thereon, as in the electrochemical cell 20A. In the electrochemical cell 20C, a thin film of a proton conductor having the composition $SrCe_{0.95}Yb_{0.05}C_{3-\delta}$ was provided on the electrolyte 21 as the intermediate layer 22, as in the electrochemical cell 20B, and a porous metallic nickel electrode 24c was provided thereon by applying and firing nickel oxide and reducing it with 1% hydrogen in the cell. The anode used for each cell was a palladium electrode 23a.

The electrolyte 21 was disk-shaped (circular), and it had a diameter of about 13.5 mm and a thickness of 0.5 mm. For the electrochemical cell 20A, palladium paste was applied to the center of one surface (anode surface) of the disk-shaped sample in a circle with a diameter of 8 mm and was fired at 1,400°C for two hours, and platinum paste was then applied to the center of the other surface (cathode, surface) in a circle with a diameter of 8 mm and was fired at 950°C for 30 minutes. For the electrochemical cells 20B and 20C, a paste containing $SrCe_{0.95}Yb_{0.05}O_{3-\delta}$ powder was applied to the center of one surface (cathode surface) of the disk-shaped electrolyte 21 in a circle with a diameter of 8 mm and was fired at 1,500°C for five hours, and palladium paste was then applied to the center of the other surface (anode surface) in a circle with a diameter of 8 mm and was fired at 1,400°C for two hours. For the electrochemical cell 20B, additionally, platinum paste was applied to the fired $SrCe_{0.95}Yb_{0.05}O_{3-\delta}$ film on the cathode surface in a circle with a diameter of 8 mm and was fired at 950°C for 30 minutes. For the electrochemical cell 20C, nickel oxide paste was applied to the fired $SrCe_{0.95}Yb_{0.05}O_{3-\delta}$ film on the cathode surface in a circle with a diameter of 8 mm and was fired at 950°C for 30 minutes. The porous platinum electrode 23c and the porous nickel electrode 24c had a thickness of about 5 $\mu$m (microns), and the intermediate layers 22, formed of $SrCe_{0.95}Yb_{0.05}O_{3-\delta}$, had a thickness of about 10 $\mu$m (microns).

(Evaluation Results)

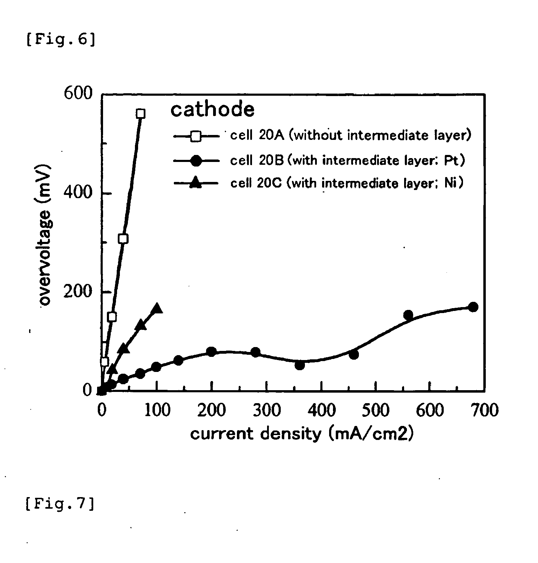

The evaluation apparatus and the evaluation method were the same as those of Example 1. Fig. 6 shows the results of measurement of the cathode overvoltages of the electrochemical cells 20A to 20C. The cell 20A, including no intermediate layer 22, had a high overvoltage approaching 600 mV at a low current density, namely, 70 mA/cm$^2$. In contrast, the cell 20B, including the intermediate layer 21 and the platinum electrode, had a low overvoltage, namely, about 170 mV, at a current density of 680 mA/cm$^2$, and the cell 20C, including the intermediate layer 21 and the nickel electrode, had a low overvoltage, namely, about 165 mV, at 100 mA/cm$^2$.

Example 3

In this example, proton-conductor cells were evaluated for power generation characteristics as hydrogen fuel cells.

(Samples)

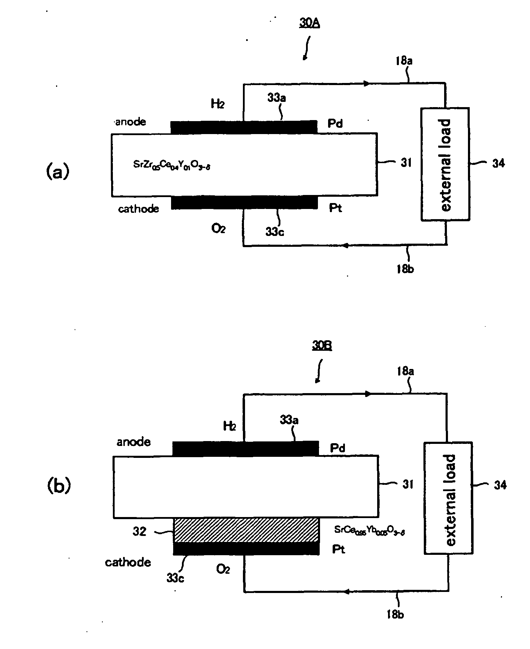

Figs. 7(a) and 7(b) show electrochemical cells 30A and 30B, respectively, used for evaluation. In these figures, the proton-conductive electrolyte 31 used was formed of a ceramic having the composition $SrZr_{0.9}Y_{0.1}O_{3-\delta}$. The cathode used for the electrochemical cell 30A was a porous platinum electrode 33c having a diameter of 8 mm and directly provided on the electrolyte 31. In the electrochemical cell 30B, a thin film of a proton conductor having the composition $SrCe_{0.95}Yb_{0.05}O_{3-\delta}$ was provided on the electrolyte 31 as an intermediate layer 32, and the porous platinum electrode 33c was provided thereon, as in the electrochemical cell 30A, thus constituting a cathode. The anode used was a palladium electrode 33a. The processing/treatment and shape of the samples and the evaluation apparatus were the same as those of the above examples except that an oxygen-containing gas was introduced into the cathode of the evaluation apparatus 1 instead of the sweep gas.

(Evaluation Method)

The electrochemical cells thus configured were maintained at 800°C in an electric furnace and were subjected to the following power generation test for fuel cells. Pure hydrogen and pure oxygen were introduced into the anode chamber 16a and the cathode chamber 17a, respectively, at a gas flow rate of 30 mL/min. These gases were wetted with saturated steam at 17°C (the steam partial pressure was about 1,900 Pa). The anode gas served as a fuel, and the cathode gas served as an oxidizing agent for oxidizing the fuel to produce water. With the gases introduced, as described above, an external load 34 was connected to the leads 18a and 18b so that a predetermined current was allowed to flow from the anode to the cathode. The anode and cathode characteristics were measured by the current interruption method. The measurement procedure was the same as that of Example 1.

(Evaluation Results)

The figure below shows the cathode overvoltage measured by both tests. While the cell 30A, including no intermediate layer 32, had a cathode overvoltage of about 170 mV at a low current density, namely, 12 mA/cm$^2$, the cell 30B, including the intermediate layer, had a significantly low cathode overvoltage, namely, about 60 mV, at a current density of 100 mA/cm$^2$. Accordingly, while the current density of the cell 30A at a terminal voltage of 0.4 V was 12 mA/cm$^2$, the current density of the cell 30B at a terminal voltage of 0.4 V was 100 mA/cm$^2$; that is, the cell 30B was capable of producing more current. These results demonstrated the effectiveness of the intermediate layer.

In addition, the following evaluations (Examples 4 and 5) were carried out to evaluate the stability of electrochemical cells in the case where a gas containing carbon dioxide was present in the anode chamber.

Example 4

Partial oxidation of a hydrocarbon gas such as methane produces a mixed gas of hydrogen and carbon monoxide, which is in turn mixed with steam to produce carbon dioxide through a reaction represented by the following formula (4):

$$CO + H_2O \rightarrow CO_2 + H_2 \qquad (4)$$

In a test carried out in this example, hydrogen was separated from a mixed gas of hydrogen and carbon monoxide containing steam under the assumption that carbon dioxide would be produced after partial oxidation of a hydrocarbon gas.

(Sample)

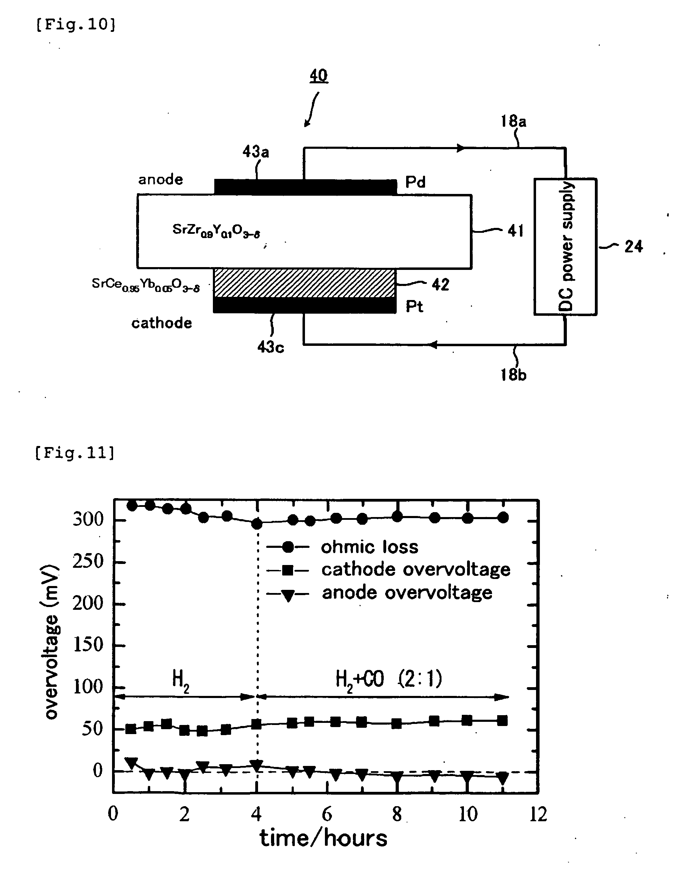

Fig. 10 shows an electrochemical cell 40 used for evaluation. In this figure, the proton-conductive electrolyte 41 used was formed of a ceramic having the composition $SrZr_{0.9}Y_{0.1}O_{3-\delta}$. A thin film of a proton conductor having the composition $SrCe_{0.95}Yb_{0.05}O_{3-\delta}$ was provided only on the cathode side of the electrolyte, where hydrogen was to be produced, as an intermediate layer 42, and a porous platinum electrode 43c was provided thereon. The anode used was a palladium electrode 43a.

The electrolyte sample was disk-shaped (circular), and it had a diameter of about 13.5 mm and a thickness of 0.5 mm. First, a paste containing $SrCe_{0.95}Yb_{0.05}C_{3-\delta}$ powder was applied to the center of one surface (cathode surface) of the disk-shaped electrolyte in a circle with a diameter of 8 mm and was fired at 1,500°C for five hours, and palladium paste was then applied to the center of the other surface (anode surface) in a circle with a diameter of 8 mm and was fired at 1,400°C for two hours. In addition, platinum paste was applied to the fired $SrCe_{0.95}Yb_{0.05}O_{3-\delta}$ film on the cathode surface in a circle with a diameter of 8 mm and was fired at 950°C for 30 minutes.

The porous platinum electrode 43c and the palladium electrode 43a had a thickness of about 5 $\mu m$ (microns), and the intermediate layer 42, formed of $SrCe_{0.95}Yb_{0.05}O_{3-\delta}$, had a thickness of about 10 $\mu m$ (microns).

(Evaluation Method)

The same performance evaluation apparatus 1 as that used in Example 1 was used. The electrochemical cell 40 was maintained at 700°C in an electric furnace and was subjected to the following test. First, pure hydrogen was introduced into the anode chamber 16a at a gas flow rate of 100 mL/min, and an argon gas containing 1% hydrogen was introduced into the cathode chamber 17a at a gas flow rate of 30 mL/min. These gases were wetted with saturated steam at 17°C (the steam partial pressure was about 1,900 Pa) to prevent reduction of the electrolyte sample. With the gases introduced, as described above, a DC power supply was connected to the leads 18a and 18b so that a current of 20 mA (current density: 40 mA/cm$^2$) was allowed to flow from the anode to the cathode for four hours. Subsequently, the gas flow of hydrogen at 100 mL/min was mixed with a gas flow of carbon monoxide at 50 mL/min to introduce a mixed gas containing hydrogen and carbon monoxide in a ratio of 2:1 into the anode chamber 16a (the mixing ratio, namely, CO:$H_2$ = 1:2 (by volume), was determined based on a gas produced by a partial oxidation reaction (formula (5)) of methane ($CH_4$)).

$$CH_4 + 1/2O_2 \rightarrow CO + 2H_2 \qquad (5)$$

The current was successively supplied at a current density of 40 mA/cm$^2$ for seven hours. The rate at which the current caused hydrogen to be pumped from the anode chamber 16a to the cathode chamber 17a, that is, the hydrogen production rate at the cathode, was determined by measuring the hydrogen concentration of a cathode-outlet gas by gas chromatography. The anode and cathode characteristics were measured by the current interruption method. The measurement procedure was the same as that of Example 1.

(Evaluation Results)

The amount of hydrogen pumped was not less than 97% of the theoretical value throughout the test in which hydrogen was used as the anode gas and the test in which the mixed gas of hydrogen and carbon monoxide was used as the anode gas; that is, the current efficiency approached 1. Fig. 11 shows variations in electrode overvoltage and electrolyte resistance overvoltage with time in this case. In the test in which the mixed gas of hydrogen and carbon monoxide was used as the anode gas, the anode and cathode overvoltage and the electrolyte resistance overvoltage both showed no significant variations with time and remained nearly constant. These values also showed little change from those before the anode gas was mixed with carbon monoxide. These results demonstrate that the above electrochemical cell can stably separate hydrogen from a reformed gas of hydrocarbon, such as natural gas, without degradation due to carbon dioxide produced by the reaction (5).

Example 5

In a test carried out in this example, hydrogen was separated from a mixed gas of hydrogen and carbon dioxide to examine the effect of carbon dioxide more clearly.

(Sample)

The same sample as that of the electrochemical cell 40 of Example 4 was used.

(Evaluation Method)

The same performance evaluation apparatus 1 as that used in Example 1 was used. The electrochemical cell 40 was maintained at 700°C in an electric furnace and was subjected to the following evaluation test. First, pure hydrogen was introduced into the anode chamber 16a at a gas flow rate of 100 mL/min, and an argon gas containing 1% hydrogen was introduced into the cathode chamber 17a at a gas flow rate of 30 mL/min. These gases were wetted with saturated steam at 17°C (the steam partial pressure was about 1,900 Pa) to prevent reduction of the electrolyte sample. With the gases introduced, as described above, a DC power supply was connected to the leads 18a and 18b, as shown in the apparatus diagram, so that a current of 20 mA (current density: 40 mA/cm$^2$) was allowed to flow from the anode to the cathode for two hours. Subsequently, the gas flow of hydrogen at 100 mL/min was mixed with a gas flow of carbon dioxide at 50 mL/min to introduce a mixed gas containing hydrogen and carbon dioxide in a ratio of 2:1 into the anode chamber. The current was successively supplied at a current density of 40 mA/cm$^2$ for three hours.

The rate at which the current caused hydrogen to be pumped from the anode chamber 16a to the cathode chamber 17a, that is, the hydrogen production rate at the cathode, was determined by measuring the hydrogen concentration of a cathode-outlet gas by gas chromatography. The anode and cathode characteristics were measured by the current interruption method. The measurement procedure was the same as that of Example 1.

(Evaluation Results)

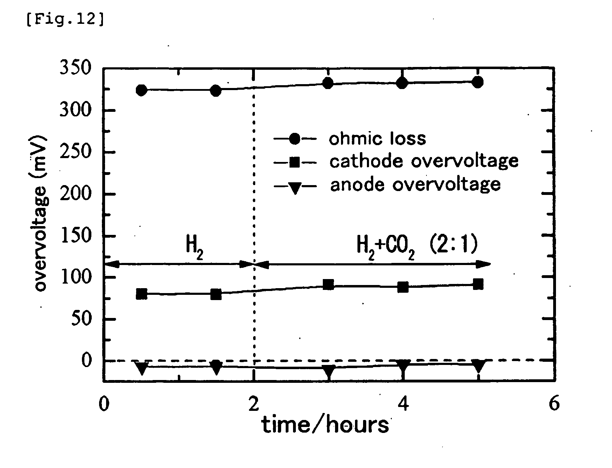

The amount of hydrogen pumped was not less than 98% of the theoretical value throughout the test in which hydrogen was used as the anode gas and the test in which the mixed gas of hydrogen and carbon dioxide was used as the anode gas; that is, the current efficiency approached 1. Fig. 12 shows variations in electrode overvoltage and electrolyte resistance overvoltage with time in this case. In the test in which the mixed gas of hydrogen (67%) and carbon dioxide (33%) was used as the anode gas, the anode and cathode overvoltages and the electrolyte resistance overvoltage both showed no significant variations with time and remained nearly constant. Note that the negative values of the anode overvoltage shown in the figure, which should have intrinsically been expressed in positive values, were due to a test error. The overvoltages also showed little change from those before the anode gas was mixed with carbon dioxide. These results demonstrate that the electrochemical cell according to the present invention can stably separate hydrogen without being degraded by 33% carbon dioxide.

Industrial Applicability

The present invention is widely applicable to electrochemical devices for use in, for example, hydrogen separation for hydrogen production and fuel cells.

Brief Description of Drawings

Fig. 1 is a diagram of a performance evaluation apparatus 1 for an electrochemical cell according to the present invention.
Fig. 2 is a set of diagrams of electrochemical cells 10A and 10B.

Fig. 3 is a graph showing the anode overvoltage characteristics of the electrochemical cells 10A and 10B.

Fig. 4 is a graph showing the cathode overvoltage characteristics of the electrochemical cells 10A and 10B.

Fig. 5 is a set of diagrams of electrochemical cells 20A to 20C.

Fig6 is a graph showing the cathode overvoltage characteristics of the electrochemical cells 20A to 20C.

Fig. 7 is a set of diagrams of electrochemical cells 30A and 30B.

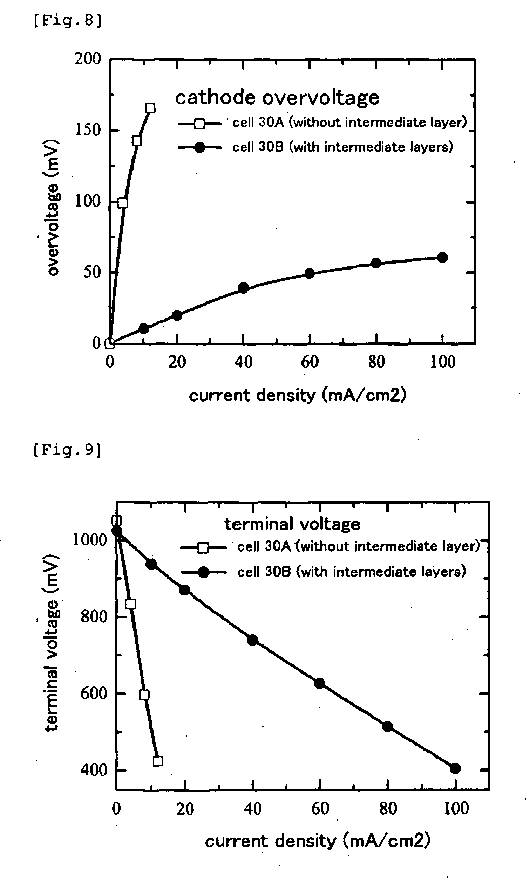

Fig. 8 is a graph showing the cathode overvoltage characteristics of the electrochemical cells 30A and 30B.

Fig. 9 is a graph showing the terminal voltage characteristics of the electrochemical cells 30A and 30B.

Fig. 10 is a diagram of an electrochemical cell 40.

Fig. 11 is a graph showing overvoltage characteristics in the case where a mixed gas of hydrogen and carbon monoxide was introduced into an anode chamber.

Fig. 12 is a graph showing overvoltage characteristics in the case where a mixed gas of hydrogen and carbon dioxide was introduced into an anode chamber.

Reference Numerals

1: performance evaluation apparatus

10A, 10B, 20A, 20B, 20C, 30A, 30B, and 40: electrochemical cell

11, 21, 31, and 40: proton-conductive electrolyte

12, 22, 32, and 40: intermediate layer

13a: anode

13b and 13c: cathode

16: ceramic tube

16a: anode chamber

17a: cathode chamber

18a and 18b: lead

19: sealing member

23a, 33a, and 43a: palladium electrode

23c, 33c, and 43c: porous platinum electrode

24: DC power supply

24c: porous nickel electrode

34: external load

**Claims**

1. An electrochemical cell comprising an electrolyte formed of a proton conductor containing zirconium (Zr), wherein an intermediate layer containing a proton conductor containing no zirconium is disposed between at least one electrode side of the electrolyte and an electrode; wherein the proton conductor containing no zirconium is represented by the general formula $A_xCe_{1-y}M_yO_{3-\delta}$ (wherein A is at least one of calcium (Ca), strontium (Sr), and barium (Ba); the range of x is $0.8 \leq x \leq 1.2$; the range of y is $0.01 \leq y \leq 0.4$; and M is at least one of aluminum (Al), scandium (Sc), gallium (Ga), yttrium (Y), indium (In), and rare-earth metals other than cerium which are the elements of atomic numbers 57 and 59 to 71); and wherein the proton conductors are proton conductors having a perovskite structure.

2. The electrochemical cell according to Claim 1, wherein the intermediate layer contains a mixed powder of the proton conductor containing no zirconium and an electrode material.

3. The electrochemical cell according to Claims 1 to 2, wherein the proton conductor containing no zirconium is $SrCe_{0.95}Yb_{0.05}O_{3-\delta}$.

4. The electrochemical cell according to Claims 1 to 3, wherein a gas containing no carbon dioxide ($CO_2$) is introduced to the electrode side on which the intermediate layer is disposed.

5. The electrochemical cell according to Claims 1 to 4, wherein the intermediate layer has a thickness of 0.5 to 15 $\mu$m.

6. A hydrogen-pumping apparatus comprising the electrochemical cell according to Claims 1 to 5.

**7.** A fuel-cell apparatus comprising the electrochemical cell according to Claims 1 to 5.

**8.** A method for producing the electrochemical cell according to Claims 1 to 5, the method comprising:

fixing the intermediate layer containing the proton conductor containing no zirconium on at least one electrode side of the electrolyte formed of the proton conductor containing zirconium; and
fixing the electrode on a surface of the intermediate layer.

**9.** The method for producing the electrochemical cell according to Claim 8, wherein the step of fixing the intermediate layer includes a substep of firing the intermediate layer at a temperature of 1,450°C to 1,550°C.


**Patentansprüche**

**1.** Eine elektrochemische Zelle, umfassend einen Elektrolyten, gebildet aus einem Protonenleiter, der Zirconium (Zr) enthält, worin eine Zwischenschicht, die einen Protonenleiter enthält, der kein Zirconium enthält, zwischen mindestens einer Elektrodenseite des Elektrolyten und einer Elektrode angeordnet ist; worin der Protonenleiter, der kein Zirconium enthält durch die allgemeine Formel $A_xC_{1-y}M_yO_{3-\delta}$ repräsentiert ist, (worin A mindestens eines aus Calcium (Ca), Strontium (Sr) und Barium (Ba) ist; der Bereich von x $0,8 \leq x \leq 1,2$ ist; der Bereich von y $0,01 \leq y \leq 0,4$ ist; und M mindestens eines von Aluminium (Al), Scandium (Sc), Gallium (Ga), Yttrium (Y), Indium (In), und anderen Seltenerdmetallen als Cer ist, die die Elemente mit den Ordnungszahlen 57 und 59 bis 71 sind); und worin die Protonenleiter Protonenleiter sind, die Perowskitstruktur haben.

**2.** Die elektrochemische Zelle gemäß Anspruch 1, worin die Zwischenschicht ein gemischtes Pulver des Protonenleiters, der kein Zirconium enthält, und eines Elektrodenmaterials enthält.

**3.** Die elektrochemische Zelle gemäß den Ansprüchen 1 bis 2, worin der Protonenleiter, der kein Zirconium enthält, $SrCe_{0.95}Yb_{0.05}O_{3-\delta}$ ist.

**4.** Die elektrochemische Zelle gemäß den Ansprüchen 1 bis 3, worin ein Gas, das kein Kohlendioxid ($CO_2$) enthält, an die Elektrodenseite geleitet wird, an der die Zwischenschicht angeordnet ist.

**5.** Eine elektrochemische Zelle gemäß den Ansprüchen 1 bis 4 , worin die Zwischenschicht eine Dicke von 0,5 bis 15 $\mu$m hat.

**6.** Eine wasserstoffpumpende Vorrichtung, umfassend die elektrochemische Zelle gemäß den Ansprüchen 1 bis 5.

**7.** Eine Brennstoffzellenvorrichtung, umfassend die elektrochemische Zelle gemäß den Ansprüchen 1 bis 5.

**8.** Ein Verfahren zur Herstellung der elektrochemischen Zelle gemäß den Ansprüchen 1 bis 5, wobei das Verfahren umfasst:

das Befestigen der Zwischenschicht, die den Protonenleiter enthält, der kein Zirconium enthält, an mindestens einer Elektrodenseite des Elektrolyten, der durch den Protonenleiter, der Zirconium enthält, gebildet wird; und
das Befestigen der Elektrode an einer Oberfläche der Zwischenschicht.

**9.** Das Verfahren zur Herstellung der elektrochemischen Zelle gemäß Anspruch 8, worin der Schritt des Befestigens der Zwischenschicht einen Unterschritt des Brennens der Zwischenschicht bei einer Temperatur von 1.450°C bis 1.550°C einschließt.


**Revendications**

**1.** Pile électrochimique comprenant un électrolyte formé d'un conducteur de protons contenant du zirconium (Zr), dans laquelle une couche intermédiaire contenant un conducteur de protons ne contenant pas de zirconium est disposée entre au moins un côté d'électrode de l'électrolyte et une électrode ; dans laquelle le conducteur de protons ne contenant pas de zirconium est représenté par la formule générale $A_xCe_{1-y}M_yO_{3-\delta}$ (dans laquelle A est au moins un du calcium (Ca), du strontium (Sr), et du baryum (Ba) ; la plage de x est $0,8 \leq x$ 1,2 ; la plage de y est $0,01 \leq$

y ≤ 0,4 ; et M est au moins un de l'aluminium (Al), du scandium (Sc), du gallium (Ga), de l'yttrium (Y), de l'indium (In), et des métaux des terres rares autres que le cérium qui sont les éléments de nombres atomiques 57 et 59 à 71) ; et dans laquelle les conducteurs de protons sont des conducteurs de protons ayant une structure de pérovskite.

2. Pile électrochimique selon la revendication 1, dans laquelle la couche intermédiaire contient une poudre mixte du conducteur de protons ne contenant pas de zirconium et d'un matériau d'électrode.

3. Pile électrochimique selon la revendication 1 ou 2, dans laquelle le conducteur de protons ne contenant pas de zirconium est $SrCe_{0.95}Yb_{0.05}O_{3-\delta}$.

4. Pile électrochimique selon l'une quelconque des revendications 1 à 3, dans laquelle un gaz ne contenant pas de dioxyde de carbone ($CO_2$) est introduit sur le côté d'électrode sur lequel la couche intermédiaire est disposée.

5. Pile électrochimique selon l'une quelconque des revendications 1 à 4, dans laquelle la couche intermédiaire a une épaisseur de 0,5 à 15 μm.

6. Appareil de pompage d'hydrogène comprenant la pile électrochimique selon les revendications 1 à 5.

7. Appareil de pile à combustible comprenant la pile électrochimique selon les revendications 1 à 5.

8. Procédé de production de la pile électrochimique selon les revendications 1 à 5, le procédé comprenant :

   la fixation de la couche intermédiaire contenant le conducteur de protons ne contenant pas de zirconium sur au moins un côté d'électrode de l'électrolyte formé du conducteur de protons contenant du zirconium ; et
   la fixation de l'électrode sur une surface de la couche intermédiaire.

9. Procédé de production de la pile électrochimique selon la revendication 8, dans lequel l'étape de fixation de la couche intermédiaire inclut une sous-étape de cuisson de la couche intermédiaire à une température de 1 450°C à 1 550°C.

[Fig.1]

[Fig.2]

(a) anode — 13a — Pt — $SrZr_{0.9}Y_{0.1}O_{3-\delta}$ — 11 — cathode — 13c — Pt — 18a — DC power supply — 24 — 18b — 10A

(b) anode — 13a — Pt — 12 — $SrZr_{0.9}Y_{0.1}O_{3-\delta}$ — 11 — $SrCe_{0.95}Yb_{0.05}O_{3-\delta}$ — 12 — cathode — 13c — Pt — 18a — DC power supply — 24 — 18b — 10B

[Fig.3]

[Fig.4]

[Fig.5]

(a)  20A

anode  23a  Pd
$SrZr_{0.5}Ce_{0.4}Y_{0.1}O_{3-\delta}$  21
cathode  23c  Pt
18a  18b
DC power supply  24

(b)  20B

anode  23a  Pd
$SrZr_{0.5}Ce_{0.4}Y_{0.1}O_{3-\delta}$  21
$SrCe_{0.95}Yb_{0.05}O_{3-\delta}$  22
cathode  23c  Pt
18a  18b
DC power supply  24

(c)  20C

anode  23a  Pd
$SrZr_{0.5}Ce_{0.4}Y_{0.1}O_{3-\delta}$  21
$SrCe_{0.95}Yb_{0.05}O_{3-\delta}$  22
cathode  24c  Ni
18a  18b
DC power supply  24

[Fig.6]

[Fig.7]

<u>30A</u>

(a)

anode

$SrZr_{0.5}Ce_{0.4}Y_{0.1}O_{3-\delta}$

cathode

$H_2$  33a

$O_2$  33c

Pd

Pt

31

18a

18b

external load

34

<u>30B</u>

(b)

anode

cathode

32

$H_2$  33a

$O_2$

33c

Pd

$SrCe_{0.95}Yb_{0.05}O_{3-\delta}$

Pt

31

18a

18b

external load

34

[Fig.8]

[Fig.9]

[Fig.10]

[Fig.11]

[Fig.12]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9052764 A
- JP 2004017100 W
- JP 2002083611 A
- EP 1598892 A1